# EUROPEAN PATENT SPECIFICATION

(11) **EP 4 193 094 B1**
(45) Date of publication and mention of the grant of the patent: **20.11.2024**
(21) Application number: 21742545.3
(22) Date of filing: 24.06.2021
(51) Int. Cl.: F24D 11/02, F24D 17/00, F24D 17/02

(54) **SYSTEM FOR EMISSION-FREE YEAR-ROUND GENERATION, STORAGE AND PROCESSING OF THERMAL AND ELECTRICAL ENERGY**
SYSTEM ZUR EMISSIONSFREIEN GANZJÄHRIGEN ERZEUGUNG, SPEICHERUNG UND VERARBEITUNG VON THERMISCHER UND ELEKTRISCHER ENERGIE
SYSTÈME DE PRODUCTION, DE STOCKAGE ET DE TRAITEMENT, TOUTE L'ANNÉE ET SANS ÉMISSION, D'ÉNERGIE THERMIQUE ET ÉLECTRIQUE

(30) Priority: 06.08.2020 PL 43491320
(43) Date of publication of application: 14.06.2023
(73) Proprietor: Firma Handlowo Uslugowa Urzadzenia Chlodnicze - Marek Czamara, 34-600 Limanowa (PL); Czamara, Marek, 34-600 Limanowa (PL)
(72) Inventor: CZAMARA, Marek, 34-600 Limanowa (PL)
(74) Representative: AOMB Polska Sp. z.o.o.
(86) International application number: PCT/PL2021/000038
(87) International publication number: WO 2022/031179

(56) References cited:
- EP-A1- 0 382 456
- EP-A1- 3 012 539
- EP-B1- 0 382 456
- WO-A1-2007/109899
- DE-A1- 102007 019 748
- DE-A1- 3 004 062

## Description

The object of the invention is a system for emission-free year-round generation, storage and processing of thermal and electrical energy.

Solar energy systems, which transfer it to the domestic water heating system via heat exchangers as thermal energy are known.

Solar energy systems are known, which through photovoltaic panel modules have cooling systems installed, from which the extracted heat energy is transferred by means of circulation pumps to the domestic water heating or central heating systems.

Heat pumps are also known which recover heat from the environment, most often from the ground and groundwater, returning this heat via heat exchangers to the domestic hot water or central heating system.

From the description of U.S. invention application no. US 20110067424 entitled "Efficient photovoltaic (PV) cell based heat pump liquid heater", a heat pump bottom source heating system is known which is coupled to high efficiency PV photovoltaic panels. The refrigerant circuit in the system is a closed circuit. In this system, the coolant circulates around the photovoltaic cells, picks up the heat generated by the photovoltaic cells, and the temperature of the photovoltaic cells as a result of the coolant circulation drops to a certain level or stays within an acceptable temperature range. The temperature limitation causes the photovoltaic cells to operate with greater efficiency and can produce more electrical power.

From U.S. Patent Description No. US 7441558 entitled "Active thermal energy storage system", a thermal energy storage system comprising using a thermal energy storage material is known, having a melting point above 0°C, which material is stable at ambient pressure and temperature and is stored in an accumulation tank. The energy storage material is used as a heat exchange system, preferably via a heat pump, for the heating of the building and the associated hot water. The system is complemented by a solar system that is used to collect energy during daylight hours, storing the stored energy in an energy storage material. The stored energy is used during the evening hours to heat the air circulating in the building where the system is installed.

From the international publication of invention application no. WO 2011/036738 entitled. "Heat pump power generation system", a heat pump power generation system comprising a collector that converts solar energy to heat is known. The system is also equipped with a photovoltaic panel that generates electricity and receives solar radiation collected by the collector. A switch is installed in the system that switches the destinations to which the thermal energy generated by the heat stored by the collector or the cold energy generated by the cooling is delivered. The system also has accumulators to store heat or cold energy. The system is also provided with a heat pump energy generator that generates electricity using cold energy or thermal energy accumulated in a heat storage device as a heat source.

From the Polish description of the invention No. PL 222460 titled "Integrated power and heat supply system for buildings" an integrated system for supplying buildings with electrical and thermal energy using renewable energy sources is known. This system, thanks to the combined use of photovoltaic panels, wind generators, solar collectors and geothermal heat in a single system, makes it possible to supply buildings with electricity and heat at a level that ensures coverage of the energy demand of the building. The integration of the system operation parameters by means of management modules also allows the possibility of any (for example, by means of mobile telecommunication devices) remote management of monitoring and using the surplus of electric and thermal energy stored in storage systems. In this system, the photovoltaic panels are connected via a charge controller connected to the management module to the battery bank and to an inverter connected to the management module, to which the wind generators are connected simultaneously, which are also connected to the battery bank. The inverter is connected to the power consumer line and supplies the heat pump with electricity. The heat pump is controlled by a management module and is connected via hot water and cold water pipes to a diaphragm vessel via a pump on one side with a ground exchanger and via a valve system with a heat exchanger via a circulating pump on the other side with a buffer tank whose electrical heater is powered by an inverter. The buffer cylinder is supplied with water, preferably from the mains, via a valve system and diaphragm vessel and is connected to a central heating distributor connected to the heating system and controlled via the management module. The buffer storage tank is also connected by hot water and cold water pipes to a solar storage tank, whose electric heater is electrically powered from an inverter, containing a heat exchanger with solar collectors, which are on the other hand connected by a water pipe, to a pump and control unit of the solar set electrically powered from an inverter, connected to the management module. The solar storage tank is connected to the water supply via valves and a diaphragm vessel, and on its other side there is a connection with the circulation pump of the domestic hot water system, connected to the water supply via a three-way valve. The management modules and advantageously the utility receivers are connected to the management station via a collective switch. A remote control server is connected to the bulk switch.

From the Polish description of the invention No. PL 207849 entitled "Heating system for space heating using natural and renewable heat sources" a heating system comprising solar collectors which are connected to a solar energy transfer module, which is a low pressure solar energy transfer device, is known. The solar energy transfer modules are connected to the domestic hot water cylinder, to which tap water is supplied via a diaphragm vessel and safety valve. Domestic hot water circulation is provided by a pump. The system also consists of a heat pump connected to the deep water intake via a plate heat exchanger. The heat pump also receives pulses from the outside air temperature sensor. The heat pump is directly connected to the process hot water buffer tank and the domestic hot water cylinder. The heat pump is connected to the hot process water buffer tank via a three-way valve. The domestic hot water cylinder is connected to the heat pump via a pump and a plate heat exchanger. The plate heat exchanger is also directly connected to the domestic hot water tank. The hot water storage tanks are connected to a hot water circulation system consisting of two pumps. The domestic hot water tanks are connected via two three-way valves to the central hot water tank. The plate heat exchanger is connected to the heat pump via a pump and an installed safety valve, which has a connection to the buffer tank. The heat pump is connected to a hot process water buffer tank via a pump, an electric heater and a three-way valve. The buffer tank 10 is connected to the pre-heater and to the secondary heater of the air handling unit. The air handling unit is connected to the diaphragm vessel via a three-way valve and pump. The cross-flow heat exchanger of the air handling unit is connected to the filter of the sucked outside air and to the fan of the used air removed to the atmosphere through a preheater. On the other hand, the cross-flow heat exchanger is connected to the external air intake fan E6 and the exhaust air solids filter via the secondary heater and cooler.

From the international publication of the invention application No. WO 2007/109899 entitled "Energy supply system", a thermal energy supply system is known. The system comprises a thermal energy storage container containing a thermal energy storage mass. The thermal energy storage container includes a structure or material that thermally insulates the inner volume of the container. The system has one or more solar collectors for supplying thermal energy to the mass, and energy supply means for extracting thermal energy from the mass and supplying thermal energy to the thermal energy receiver. The thermal energy storage container is capable of storing thermal energy for a period of several months, so that thermal energy deposited in the container during the summer months is available during the winter months for space and water heating.

Both the solar system, consisting of solar collectors and solar energy transport modules for domestic hot water heating, and the heat pump, which draws its energy from groundwater and deep-water intakes, transfer heat energy via heat exchangers to the heating system. The energy is then transferred to heat up the domestic water supplying taps in bathrooms and toilets or to heat up water in radiators.

The inconvenience of known heating systems and systems using natural and renewable heat sources is their limited use only as an additional heat source to working conventional heating systems. Installed in these known heating systems, heat pumps do not use the ground at different depths of their foundation to store heat energy with the possibility of any use the thermal energy over time.

The aim of the system for system for emission-free year-round generation, storage and processing of thermal and electrical energy according to the invention is to completely eliminate conventional heat sources for obtaining domestic hot water and for heating buildings, including multi-family buildings.

The essence of the system for system for emission-free year-round generation, storage and processing of thermal and electrical energy is the continuous storage of thermal energy by the system using lower heat sources such as an underground insulated tank, an underground uninsulated tank and a ground heat exchanger. In these lower heat sources, which are connected to the heat pump, circulating pumps and no less than two heat exchangers are installed. Lower heat sources are the storage of the heat energy previously generated by the system.

The system for emission-free year-round generation, storage and processing of thermal and electrical energy according to the invention is constructed from no less than two sets of rotary solar collectors, from stationary photovoltaic panel modules and from photovoltaic panel modules installed on rotary tracers, from hot water buffer tanks, from a domestic hot water storage tank (d.h.w.), insulated underground thermal energy storage, uninsulated underground thermal energy storage, ground storage including ground heat exchanger, heat pump, system circulation pumps, three-way valves, system heat exchangers, electricity accumulators including inverters. The heat pump installed in the system cooperates directly with three bottom heat sources: with an insulated underground tank, with an uninsulated underground tank and through a circulation pump and a three-way valve with a ground heat exchanger, which are vertical boreholes in the ground. On the downstream side, the heat pump is connected to the upper heat exchanger installed inside the insulated underground tank and to the upper heat exchanger installed inside the uninsulated underground tank through a circulation pump and a three-way valve. The heat pump is also connected to the plate heat exchanger via a circulation pump and a series of three-way valves. The plate heat exchanger in the system is connected to the hot water buffer tank by a circulation pump. On the upstream side, the heat pump is connected via a circulation pump and three-way valves to the hot water buffer cylinders. The system is built from sets of rotating solar collectors, from photovoltaic panel modules installed on rotating tracers, from stationary photovoltaic panel modules. The first set of rotating solar collectors is connected via a three-way valve and circulating pump to the upper and lower coils of the hot water buffer tank and to the lower heat exchanger installed inside the insulated underground tank. The upper and lower coils of the hot water buffer tank of the first set of rotary solar collectors are connected to the upper heat exchanger mounted inside the insulated underground tank via a circulation pump and three-way valves. A three-way valve is installed between the upper and lower coils of the hot water buffer tank. The second set of rotating solar collectors is connected to the lower coil of the hot water buffer tank and to the lower heat exchanger mounted inside the insulated underground tank through a circulating pump and through a three-way valve. photovoltaic panel modules installed on rotating tracers are connected via circulating pumps to a lower heat exchanger mounted inside an uninsulated underground tank. Stationary photovoltaic panel modules are connected via a circulating pump to a lower heat exchanger mounted inside an uninsulated underground tank.

The system for emission-free year-round generation, storage and processing of thermal and electrical energy comprises a first set of rotary solar collectors which transports the generated thermal energy, by means of a circulation pump of the first set of rotary solar collectors, to a hot water buffer tank or to an insulated underground thermal energy storage. The hot water buffer tank of the first set of rotary solar collectors is a hot water buffer tank that transfers heat energy to the lower or upper coil of the hot water buffer tank, as required, via a three-way valve. Once the hot water buffer cylinder has reached the set temperature, the thermal energy from the first set of rotating solar collectors is transported via three-way valves that change the flow direction to an insulated underground energy store with two heat exchangers installed, where the excess thermal energy is stored.

The system for emission-free year-round generation, storage and processing of thermal and electrical energy comprises a second set of rotary solar collectors which transports the generated thermal energy, by means of a circulation pump of the second set of rotary solar collectors, to a hot water buffer tank of the second set of rotary solar collectors or to an insulated underground thermal energy storage. This hot water buffer cylinder is a hot water buffer cylinder that transfers heat energy to the lower coil of the hot water buffer cylinder. Once the hot water buffer cylinder has reached the set temperature, the thermal energy from the second set of rotating solar collectors is transported via three-way valves by reversing the flow direction to an insulated underground energy store with two heat exchangers installed, where the excess thermal energy is stored.

The hot water buffer tanks of the first and second set of rotary solar collectors are connected to the circulation pump of these buffer tanks, through which the hot water temperature equalization in these buffer tanks is realized.

The system for emission-free year-round generation, storage and processing of thermal and electrical energy comprises stationary photovoltaic panel modules and photovoltaic panel modules installed on rotating tracers. Photovoltaic panel modules have cooling systems installed, from which the extracted thermal energy is transferred via the from stationary photovoltaic panel modules, and photovoltaic panel circulators installed on rotary tracers to an uninsulated underground thermal energy store with two heat exchangers installed, where the excess thermal energy is stored. Advantageously, the stored thermal energy is transferred to the ground surrounding the reservoir, which provides ground thermal energy storage. The PV photovoltaic panels installed in the system and the photovoltaic panel modules installed on the PVT rotary tracers generate electricity to power the facility where the system is located. In addition, the electricity generated is used to run the electrical component equipment of the system. If there is excess electricity generated, it is stored in the power grid.

The system for emission-free year-round generation, storage and processing of thermal and electrical energy is based on a combination of solar thermal energy and heat pump energy from lower heat sources to obtain hot water for domestic use and its use in taps and sanitary facilities, as well as for obtaining hot process water for space heating by central heating system and/or air conditioning unit, through which the heating of the building is carried out with heated air.

In the case of heat demand, the heat pump installed in the system cooperates with the lower heat sources in which the heat energy has been previously stored by the system, i.e. with an underground insulated tank, an underground uninsulated tank and a ground heat exchanger.

The heat pump uses an insulated underground tank as its lower heat source, in which the high-temperature heat is stored. One of the heat exchangers of the underground tank is used to collect the heat in the insulated underground tank. Operating the heat pump with a high temperature bottom heat source significantly increases the COP of the unit. A circulating pump and appropriate configuration of three-way valves are used to extract heat from the insulated underground tank.

If the thermal energy in the insulated underground tank is exhausted, the heat pump uses the thermal energy from the uninsulated underground tank as its lower source for operation. A circulating pump and an appropriate configuration of three-way valves are used to extract heat from an uninsulated underground tank.

In summer, when there is a higher demand for cooling, the system generates cooling energy and at the same time thermal energy to supply hot water or regenerate the ground heat exchanger.

In the air-conditioned mode of operation, the invention uses the hot water buffer tank of the first set of rotary solar collectors as a cool storage.

In the process of generating cooling, the heat pump uses a circulating pump and an appropriate configuration of three-way valves to pump the cooling energy to a plate heat exchanger, from which the cooling energy is transported to the cold store via the circulating pump.

The heat generated during the generation of cold is transported by the heat pump through the circulation pump and through the appropriate configuration of the three-way valve to the plate heat exchanger. The heat energy collected in the plate heat exchanger is transported via a circulation pump to the ground heat exchanger for regeneration and preparation for operation in the winter season. In addition, the thermal energy received in the plate heat exchanger can be simultaneously transported to the ground heat exchanger and to the uninsulated underground tank through a circulation pump and through the appropriate configuration of the three-way valve also to regenerate the soil around the uninsulated underground tank and to prepare for operation in the winter season.

Electricity is generated in PV photovoltaic panels mounted in the system and in photovoltaic panel modules installed on PVT rotary tracers. This electricity is used to power the facility's system for emission-free year-round generation, storage and processing of thermal and electrical energy. In addition, the electricity generated is used to run the electrical component equipment of the system. If there is excess electricity generated, it is stored in the power grid.

The operation of the system for emission-free year-round generation, storage and processing of thermal and electrical energy is based on the use of solar energy and the energy of lower heat sources to heat domestic hot water and processhot water. In addition, the system provides the possibility of generating cold that is used to air condition the premises of the facility. The additional excess heat energy generated by the system, as well as the waste heat from the air conditioning process, is stored in a number of lower heat sources, where the heat energy is stored for later use during periods of increased heat demand.

The system for emission-free year-round generation, storage and processing of thermal and electrical energy provides complete coverage of the heat and power demand of the facility where it is installed.

The system for emission-free year-round generation, storage and processing of thermal and electrical energy according to the invention is the complete elimination of conventional, gas or oil-fired boiler houses that are a nuisance to the environment. The system is automatically controlled and does not require constant supervision. The system generates sufficient heat to heat domestic hot water for kitchens, toilets and bathrooms as well as process hot water for space heating by means of natural and renewable sources of heat. An air conditioning unit can be included in the system, which allows direct heating of rooms with air heated to the set temperature and humidity in winter, while in summer it allows cooling of the same rooms with the set parameters of the supplied air. The operation of the heating system of the equipment is fully automated and does not require constant maintenance.

The system for emission-free year-round generation, storage and processing of thermal and electrical energy according to the invention enables the heat pump to operate with different lower heat sources, which is a clear advantage, as it protects the system from shutdown due to the complete utilization of thermal energy from the lower heat source.

Another advantage of the system for emission-free year-round generation, storage and processing of thermal and electrical energy according to the invention is the possibility of simultaneous regeneration of lower heat sources when the system is operating in air-conditioning mode, which translates into effective use of waste heat generated in the air-conditioning process.

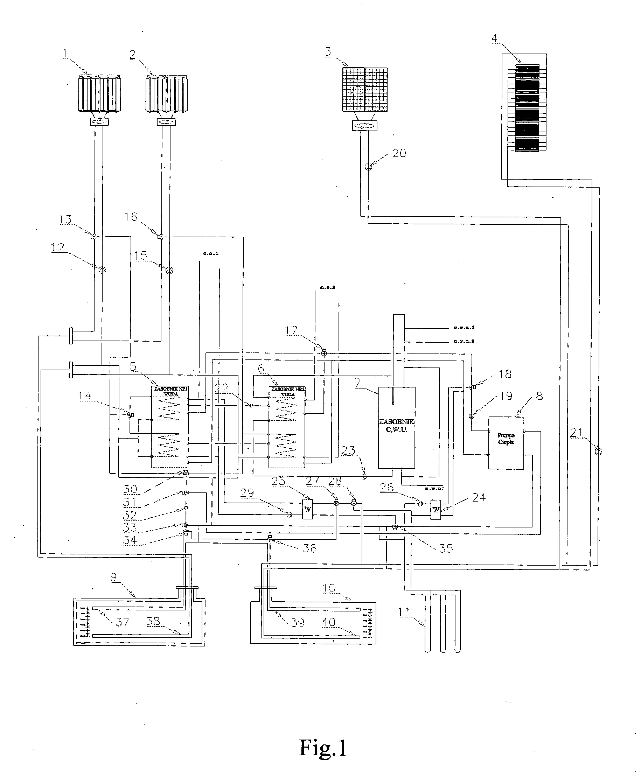

An exemplary implementation of a system for emission-free year-round generation, storage and processing of thermal and electrical energy according to the invention is shown schematically in Fig. 1, wherein Fig. 1 shows a schematic diagram of the entire system for emission-free year-round generation, storage and processing of thermal and electrical energy.

The system for emission-free year-round generation, storage and processing of thermal and electrical energy is built from two sets of rotating solar collectors 1 and 2, from photovoltaic panel modules installed on rotating tracers 3, from stationary photovoltaic panel modules 4. The set of rotary solar collectors 1 is connected via a three-way valve 13 and a five circulation pump 12 to the upper and lower coils of the hot water buffer tank 5 and to the lower heat exchanger 38 installed inside the insulated underground tank 9. The upper and lower coils of the hot water buffer tank 5, through the three-way valve 14, are connected to the upper heat exchanger 37 mounted inside the insulated underground tank 9 through the three circulation pump 32 and the three-way valves 30, 31, 33, and 34. A three-way valve 14 is installed between the upper and lower coils of the hot water buffer tank 5. The set of rotary solar collectors 2 is connected to the lower coil of the hot water buffer tank 6 and to the lower heat exchanger 38 mounted inside the insulated underground tank 9 through a sixth circulation pump 15 and through a three-way valve 16. The hot water buffer tanks 5 and 6 are connected to each other via the none circulation pump 22. The upper coil of the hot water buffer cylinder 6 is connected to the hot water cylinder via the ten circulation pump 23 is connected to the hot water storage tank 7. Photovoltaic panel modules installed on rotating tracers 3 and stationary photovoltaic panel modules 4 are connected via seventh circulating pump 20 and eighth circulating pump 21 to a lower heat exchanger 40 mounted inside the uninsulated underground tank 10. The stationary photovoltaic panel modules 4 are connected via a eighth circulating pump 21 to a lower heat exchanger 40 mounted inside the uninsulated underground tank 10.

The heat pump 8 on the lower heat source side is connected to an upper heat exchanger 37 installed inside the insulated underground tank 9 and to an upper heat exchanger 39 installed inside the uninsulated underground tank 10, wherein on the upper heat source side the heat pump 8 is connected to a lower heat exchanger 40 inside the insulated underground tank 9 and to a lower heat exchanger 40 installed inside the uninsulated underground tank 10 via a two circulation pump 19 and a three-way valve 18 and a plate heat exchanger 24. The heat pump 8 is also connected via a first circulation pump 26 and a three-way valve 28 to the ground heat exchanger 11, which is a vertical borehole in the ground. The heat pump 8 is connected to the plate heat exchanger 25 via a three circulation pump 32 and via three-way valves 27, 31, 33, 34, 35 and 36, while the plate heat exchanger 25 is connected to the hot water buffer tank 5 via a fourth circulation pump 29. On the upstream side, heat pump 8 is connected via two circulation pump 19 and three-way valves 17 and 18 to hot water buffer cylinders 5 and 6.

## Claims

1. A system for emission-free year-round generation, storage and processing of thermal and electrical energy built from sets of rotary solar collectors, from stationary photovoltaic panel modules, from hot water buffer tanks, from a domestic hot water storage tank, from an underground thermal energy storage, from a heat pump, from system circulation pumps, three-way valves of the system, system heat exchangers, wherein the heat pump (8) cooperates directly with three lower sources of heat, namely with an insulated underground tank (9), with an uninsulated underground tank (10) and through a first circulation pump (26) and a first three-way valve (28) with a ground heat exchanger (11), wherein on a lower heat source side the heat pump (8) is connected to an upper heat exchanger (37) installed inside the insulated underground tank (9) and to an upper heat exchanger (39) installed inside the uninsulated underground tank (10), **characterized in that** the system comprises photovoltaic panel modules installed on rotary tracers (3), the system comprises accumulators of electric energy together with inverters, wherein on an upper heat source side the heat pump (8) is connected to a lower heat exchanger (40) installed inside the uninsulated underground tank (10) via a second circulation pump (19) and a second three-way valve (18) and a first plate heat exchanger (24), where the heat pump (8) is also connected to a second plate heat exchanger (25) via a third circulation pump (32) and third three way valves (27, 30, 31, 33, 34, 35, 36), while the second plate heat exchanger (25) is connected to a first hot water buffer tank (5) via a fourth circulation pump (29), and on the upper heat source side the heat pump (8) is connected via the second circulation pump (19), the second three way valve (18) and a fourth three way valve (17) to the first hot water buffer tank (5) and a second hot water buffer tank (6), while the system comprises at least two sets of rotary solar collectors (1, 2), the photovoltaic panel modules installed on rotary tracers (3), and the stationary photovoltaic panel modules (4), whereby a first set of rotary solar collectors (1) is connected via a fifth three-way valve (13) and a fifth circulation pump (12) to upper and lower coils of the first hot water buffer tank (5) for hot water and to a lower heat exchanger (38) installed inside the insulated underground tank (9), and the upper and lower coils of the first hot water buffer tank (5) are connected via a sixth three-way valve (14) to the upper heat exchanger (37) installed inside the insulated underground tank (9) by means of the third circulation pump (32) and the third three-way valves (30, 31, 33, 34), whereby the sixth three-way valve (14) is installed between the upper and lower coils of the first hot water buffer tank (5), while a second set of rotary solar collectors (2) is connected to a lower coil of the second hot water buffer tank (6) and to the lower heat exchanger (38) mounted inside the insulated underground tank (9) through a sixth circulation pump (15) and through a seventh three-way valve (16) and the photovoltaic panel modules installed on rotary tracers (3) and the stationary photovoltaic panel modules (4) are connected via a seventh circulating pump (20) and a eighth circulating pump (21) to the lower heat exchanger (40) mounted inside the uninsulated underground tank (10), whereby the stationary photovoltaic panel modules (4) are connected via the eighth circulating pump (21) to the lower heat exchanger (40) mounted inside the uninsulated underground tank (10).

2. System according to claim 1, wherein the hot water buffer tanks (5, 6) are connected to each other via a ninth circulation pump (22).

3. System according to claim 1, wherein the upper coil of the second hot water buffer tank (6) is connected to a hot water tank (7) via a tenth circulation pump (23).

4. System according to claim 1, wherein the ground heat exchanger (11) is a vertical borehole in the ground around the uninsulated underground tank (10).

5. System according to claim 1, wherein the system is arranged such that in case of heat demand, the heat pump (8) connected to the insulated underground tank (9) extracts heat through the third circulation pump (32) and a suitable configuration of the third three-way valves (31, 33, 34, 35).

6. System according to claim 1, wherein the system is arranged such that in case of depletion of heat energy in the insulated underground reservoir (9), the heat pump (8) uses heat energy from the uninsulated underground reservoir (10) to operate as its lower heat source, whereby the third circulation pump (32) and a suitable configuration of the third three-way valves (31, 33, 34, 35, 36) are used to obtain heat from the uninsulated underground reservoir (10).

7. System according to claim 1, wherein the system is arranged such that in a cooling generation process, the first hot water buffer tank (5) is used as cold storage.

8. System according to claim 7, wherein the system is arranged such that in the cooling generation process the heat pump (8) uses the third circulation pump (32) and a suitable configuration of the third three-way valves (27, 31, 33, 34, 35, 36) for pumping the cooling energy to the second plate heat exchanger (25) from which the cooling energy is transported to the cold storage (5) via the fourth circulation pump (29), whereby the heat generated in the process of generating the cold is transported by the heat pump (8) via the second circulation pump (19) and the appropriate configuration of the second three-way valve (18) to the first plate heat exchanger (24), where the heat energy collected by the first plate heat exchanger (24) is transported by the first circulation pump (26) to the ground heat exchanger (11) where it is regenerated.

9. System according to claim 8, wherein the system is arranged such that the thermal energy received in the first plate heat exchanger (24) is simultaneously transported to the ground heat exchanger (11) and to the uninsulated underground tank (10) via the first circulation pump (26) and via a suitable configuration of the first three-way valve (28).

## Patentansprüche

1. Ein System zur ganzjährigen emissionsfreien Erzeugung, Speicherung und Verarbeitung von thermischer und elektrischer Energie, aufgebaut aus Gruppen von rotierenden Sonnenkollektoren, aus stationären Photovoltaikmodulen, aus Warmwasserpufferspeichern, aus einem Warmwasserspeicher, aus einem unterirdischen Wärmeenergiespeicher, aus einer Wärmepumpe, aus Systemumwälzpumpen, Dreiwegeventilen des Systems, Systemwärmetauschern, wobei die Wärmepumpe (8) direkt mit drei unteren Wärmequellen zusammenarbeitet, nämlich mit einem isolierten unterirdischen Speicher (9), mit einem nicht isolierten unterirdischen Speicher (10) und über eine erste Umwälzpumpe (26) und ein erstes Dreiwegeventil (28) mit einem Erdwärmetauscher (11), wobei die Wärmepumpe (8) auf der Seite einer unteren Wärmequelle mit einem oberen Wärmetauscher (37), der in dem isolierten unterirdischen Speicher (9) installiert ist, und mit einem oberen Wärmetauscher (39), der in dem nicht isolierten unterirdischen Speicher (10) installiert ist, verbunden ist, **dadurch gekennzeichnet, dass** das System Photovoltaikmodule umfasst, die auf rotierenden Tracern (3) installiert sind, das System Akkumulatoren für elektrische Energie zusammen mit Wechselrichtern umfasst, wobei die Wärmepumpe (8) auf der Seite einer oberen Wärmequelle über eine zweite Umwälzpumpe (19) und ein zweites Dreiwegeventil (18) und einen ersten Plattenwärmetauscher (24) mit einem unteren Wärmetauscher (4 0) verbunden ist, der in dem nicht isolierten unterirdischen Speicher (10) installiert ist, wobei die Wärmepumpe (8) über eine dritte Umwälzpumpe (32) und dritte Dreiwegeventile (27, 30, 31, 33, 34, 35, 36) auch mit einem zweiten Plattenwärmetauscher (25) verbunden ist, während der zweite Plattenwärmetauscher (25) über eine vierte Umwälzpumpe (29) mit einem ersten Warmwasserpufferspeicher (5) verbunden ist, und auf der Seite der oberen Wärmequelle die Wärmepumpe (8) über die zweite Umwälzpumpe (19), das zweite Dreiwegeventil (18) und ein viertes Dreiwegeventil (17) mit dem ersten Warmwasserpufferspeicher (5) und einem zweiten Warmwasserpufferspeicher (6) angeschlossen ist, wobei das System mindestens zwei Sätze von rotierenden Sonnenkollektoren (1, 2), die auf rotierenden Tracern (3) installierte Photovoltaikmodule und die stationären Photovoltaikmodule (4) umfasst, wobei ein erster Satz rotierender Sonnenkollektoren (1) über ein fünftes Dreiwegeventil (13) und eine fünfte Umwälzpumpe (12) mit den oberen und unteren Rohrschlangen des ersten Warmwasserpufferspeichers (5) für Warmwasser und mit einem unteren Wärmetauscher (38) verbunden ist, der im Inneren des isolierten unterirdischen Speichers (9) installiert ist, und die oberen und unteren Rohrschlangen des ersten Warmwasserpufferspeichers (5) über ein sechstes Dreiwegeventil (14) mit dem oberen Wärmetauscher (37) verbunden sind, der im Inneren des isolierten unterirdischen Speichers (9) installiert ist, und zwar mittels der dritten Umwälzpumpe (32) und der dritten Dreiwegeventile (30, 31, 33, 34), wobei das sechste Dreiwegeventil (14) zwischen der oberen und der unteren Rohrschlange des ersten Warmwasserpufferspeichers (5) installiert ist, während ein zweiter Satz rotierender Sonnenkollektoren (2) über eine sechste Umwälzpumpe (15) und ein siebtes Dreiwegeventil (16) mit einer unteren Rohrschlange des zweiten Warmwasserpufferspeichers (6) und mit dem unteren Wärmetauscher (3 8) verbunden ist, der in dem isolierten unterirdischen Speicher (9) montiert ist, und die stationären Photovoltaikmodule (4) über eine siebte Umwälzpumpe (20) und eine achte Umwälzpumpe (21) mit dem unteren Wärmetauscher (40), der im Inneren des nicht isolierten unterirdischen Speichers (10) montiert ist, verbunden sind, wobei die stationären Photovoltaikmodule (4) über die achte Umwälzpumpe (21) mit dem unteren Wärmetauscher (40) verbunden sind, der im Inneren des nicht isolierten unterirdischen Speichers (10) montiert ist.

2. System nach Anspruch 1, wobei die Warmwasserpufferspeicher (5, 6) über eine neunte Umwälzpumpe (22) miteinander verbunden sind.

3. System nach Anspruch 1, wobei die obere Rohrschlange des zweiten Warmwasserpufferspeichers (6) über eine zehnte Umwälzpumpe (23) mit einem Warmwasserspeicher (7) verbunden ist.

4. System nach Anspruch 1, wobei der Erdwärmetauscher (11) ein vertikales Bohrloch im Boden um den nicht isolierten unterirdischen Speicher (10) ist.

5. System nach Anspruch 1, wobei das System so eingerichtet ist, dass die mit dem isolierten unterirdischen Speicher (9) verbundene Wärmepumpe (8) bei Wärmebedarf über die dritte Umwälzpumpe (32) und eine geeignete Konfiguration der dritten Dreiwegeventile (31, 33, 34, 35) Wärme entzieht.

6. System nach Anspruch 1, wobei das System so eingerichtet ist, dass die Wärmepumpe (8) im Falle einer Erschöpfung der Wärmeenergie im isolierten unterirdischen Speicher (9) Wärmeenergie aus dem nicht isolierten unterirdischen Speicher (10) nutzt, um als ihre untere Wärmequelle zu arbeiten, wobei die dritte Umwälzpumpe (32) und eine geeignete Konfiguration der dritten Dreiwegeventile (31, 33, 34, 35, 36) verwendet werden, um Wärme aus dem nicht isolierten unterirdischen Speicher (10) zu erhalten.

7. System nach Anspruch 1, wobei das System so eingerichtet ist, dass der erste Warmwasserpufferspeicher (5) bei einem Kühlungserzeugungsprozess als Kältespeicher verwendet wird.

8. System nach Anspruch 7, wobei das System so eingerichtet ist, dass die Wärmepumpe (8) bei dem Kühlungserzeugungsprozess die dritte Umwälzpumpe (32) und eine geeignete Konfiguration der dritten Dreiwegeventile (27, 31, 33, 34, 35, 36) verwendet, um die Kühlenergie zum zweiten Plattenwärmetauscher (25) zu pumpen, von dem die Kühlenergie über die vierte Umwälzpumpe (29) zum Kältespeicher (5) transportiert wird, wobei die bei der Kälteerzeugung erzeugte Wärme von der Wärmepumpe (8) über die zweite Umwälzpumpe (19) und die entsprechende Konfiguration des zweiten Dreiwegeventils (18) zum ersten Plattenwärmetauscher (24) transportiert wird, wo die vom ersten Plattenwärmetauscher (24) gesammelte Wärmeenergie von der ersten Umwälzpumpe (26) zum Erdwärmetauscher (11) transportiert wird, wo sie regeneriert wird.

9. System nach Anspruch 8, wobei das System so eingerichtet ist, dass die im ersten Plattenwärmetauscher (24) aufgenommene Wärmeenergie über die erste Umwälzpumpe (26) und über eine geeignete Konfiguration des ersten Dreiwegeventils (28) gleichzeitig zum Erdwärmetauscher (11) und zum nicht isolierten unterirdischem Speicher (10) transportiert wird.

## Revendications

1. Un système de production, de stockage et de traitement de l'énergie thermique et électrique, sans émission et tout au long de l'année, construit à partir d'ensembles de capteurs solaires rotatifs, de modules de panneaux photovoltaïques fixes, de réservoirs tampons d'eau chaude, d'un réservoir de stockage d'eau chaude domestique, d'un stockage souterrain d'énergie thermique, d'une pompe à chaleur, de pompes de circulation du système, de vannes à trois voies du système, d'échangeurs de chaleur du système, dans lequel la pompe à chaleur (8) coopère directement avec trois sources de chaleur inférieures, à savoir un réservoir souterrain isolé (9), un réservoir souterrain non isolé (10) et, par l'intermédiaire d'une première pompe de circulation (26) et d'une première vanne à trois voies (28), avec un échangeur de chaleur souterrain (11), dans lequel, du côté de la source de chaleur inférieure, la pompe à chaleur (8) est reliée à un échangeur de chaleur supérieur (37) installé à l'intérieur du réservoir souterrain isolé (9) et à un échangeur de chaleur supérieur (39) installé à l'intérieur du réservoir souterrain non isolé (10), **caractérisé en ce que** le système comprend des modules de panneaux photovoltaïques installés sur des traceurs rotatifs (3), le système comprend des accumulateurs d'énergie électrique ainsi que des onduleurs, dans lequel, du côté de la source de chaleur supérieure, la pompe à chaleur (8) est reliée à un échangeur de chaleur inférieur (40) installé à l'intérieur du réservoir souterrain non isolé (10) par l'intermédiaire d'une deuxième pompe de circulation (19) et d'une deuxième vanne à trois voies (18) et d'un premier échangeur de chaleur à plaques (24), où la pompe à chaleur (8) est également reliée à un deuxième échangeur de chaleur à plaques (25) par l'intermédiaire d'une troisième pompe de circulation (32) et de troisièmes vannes à trois voies (27, 30, 31, 33, 34, 35, 36), tandis que le deuxième échangeur de chaleur à plaques (25) est relié à un premier réservoir tampon d'eau chaude (5) par l'intermédiaire d'une quatrième pompe de circulation (29), et du côté de la source de chaleur supérieure, la pompe à chaleur (8) est reliée par la deuxième pompe de circulation (19), la deuxième vanne à trois voies (18) et une quatrième vanne à trois voies (17) au premier réservoir tampon d'eau chaude (5) et à un deuxième réservoir tampon d'eau chaude (6), tandis que le système comprend au moins deux ensembles de capteurs solaires rotatifs (1, 2), les modules de panneaux photovoltaïques installés sur des traceurs rotatifs (3) et les modules de panneaux photovoltaïques fixes (4), un premier ensemble de capteurs solaires rotatifs (1) étant relié par l'intermédiaire d'une cinquième vanne à trois voies (13) et d'une cinquième pompe de circulation (12) aux serpentins supérieur et inférieur du premier réservoir tampon d'eau chaude (5) pour l'eau chaude et à un échangeur de chaleur inférieur (38) installé à l'intérieur du réservoir souterrain isolé (9), et les serpentins supérieur et inférieur du premier réservoir tampon d'eau chaude (5) sont reliés par l'intermédiaire d'une sixième vanne à trois voies (14) à l'échangeur de chaleur supérieur (37) installé à l'intérieur du réservoir souterrain isolé (9) au moyen de la troisième pompe de circulation (32) et des troisièmes vannes à trois voies (30, 31, 33, 34), la sixième vanne à trois voies (14) étant installée entre les serpentins supérieur et inférieur du premier réservoir tampon d'eau chaude (5), tandis qu'un deuxième ensemble de capteurs solaires rotatifs (2) est relié à un serpentin inférieur du deuxième réservoir tampon d'eau chaude (6) et à l'échangeur de chaleur inférieur (3 8) monté à l'intérieur du réservoir souterrain isolé (9) par l'intermédiaire d'une sixième pompe de circulation (15) et d'une septième vanne à trois voies (16) et les modules de panneaux photovoltaïques installés sur des traceurs rotatifs (3) et les modules de panneaux photovoltaïques stationnaires (4) sont reliés par l'intermédiaire d'une septième pompe de circulation (20) et d'une huitième pompe de circulation (21) à l'échangeur de chaleur inférieur (40) monté à l'intérieur du réservoir souterrain non isolé (10), les modules de panneaux photovoltaïques fixes (4) étant reliés par l'intermédiaire de la huitième pompe de circulation (21) à l'échangeur de chaleur inférieur (40) monté à l'intérieur du réservoir souterrain non isolé (10).

2. Le système selon la revendication 1, dans lequel les réservoirs tampons d'eau chaude (5, 6) sont reliés l'un à l'autre par l'intermédiaire d'une neuvième pompe de circulation (22).

3. Le système selon la revendication 1, dans lequel le serpentin supérieur du deuxième réservoir tampon d'eau chaude (6) est relié à un réservoir d'eau chaude (7) par l'intermédiaire d'une dixième pompe de circulation (23).

4. Le système selon la revendication 1, dans lequel l'échangeur de chaleur souterrain (11) est un trou de forage vertical dans le sol autour du réservoir souterrain non isolé (10).

5. Le système selon la revendication 1, dans lequel le système est agencé de telle sorte qu'en cas de demande de chaleur, la pompe à chaleur (8) reliée au réservoir souterrain isolé (9) extrait la chaleur par l'intermédiaire de la troisième pompe de circulation (32) et d'une configuration appropriée des troisièmes vannes à trois voies (31, 33, 34, 35).

6. Le système selon la revendication 1, dans lequel le système est agencé de telle sorte qu'en cas d'épuisement de l'énergie thermique dans le réservoir souterrain isolé (9), la pompe à chaleur (8) utilise l'énergie thermique du réservoir souterrain non isolé (10) pour fonctionner comme source de chaleur inférieure, la troisième pompe de circulation (32) et une configuration appropriée des troisièmes vannes à trois voies (31, 33, 34, 35, 36) étant utilisées pour obtenir de la chaleur à partir du réservoir souterrain non isolé (10).

7. Le système selon la revendication 1, dans lequel le système est agencé de telle sorte que dans un processus de génération de froid, le premier réservoir tampon d'eau chaude (5) est utilisé comme stockage de froid.

8. Le système selon la revendication 7, dans lequel le système est agencé de telle sorte que, dans le processus de génération de froid, la pompe à chaleur (8) utilise la troisième pompe de circulation (32) et une configuration appropriée des troisièmes vannes à trois voies (27, 31, 33, 34, 35, 36) pour pomper l'énergie de refroidissement vers le deuxième échangeur de chaleur à plaques (25), à partir duquel l'énergie de refroidissement est transportée vers le stockage de froid (5) par l'intermédiaire de la quatrième pompe de circulation (29), la chaleur générée dans le processus de génération de froid étant transportée par la pompe à chaleur (8) par l'intermédiaire de la deuxième pompe de circulation (19) et de la configuration appropriée de la deuxième vanne à trois voies (18) vers le premier échangeur de chaleur à plaques (24), où l'énergie thermique collectée par le premier échangeur de chaleur à plaques (24) est transportée par la première pompe de circulation (26) vers l'échangeur de chaleur souterrain (11), où elle est régénérée.

9. Le système selon la revendication 8, dans lequel le système est agencé de telle sorte que l'énergie thermique reçue dans le premier échangeur de chaleur à plaques (24) est simultanément transportée vers l'échangeur de chaleur souterrain (11) et vers le réservoir souterrain non isolé (10) par l'intermédiaire de la première pompe de circulation (26) et d'une configuration appropriée de la première vanne à trois voies (28).
